# EUROPÄISCHE PATENTSCHRIFT

(11) **EP 2 686 578 B1**
(45) Veröffentlichungstag und Bekanntmachung des Hinweises auf die Patenterteilung: **20.10.2021**
(21) Anmeldenummer: 12707575.2
(22) Anmeldetag: 05.03.2012
(51) Int. Cl.: F16G 13/12, F16G 15/04

(54) **VORRICHTUNG ZUM ANSCHLAGEN VON KETTENGLIEDERN**
DEVICE FOR ATTACHING CHAIN LINKS
DISPOSITIF POUR FIXER DES MAILLONS DE CHAÎNE

(30) Priorität: 18.03.2011 DE 102011005805
(43) Veröffentlichungstag der Anmeldung: 22.01.2014
(73) Patentinhaber: RUD Ketten Rieger & Dietz GmbH u. Co. KG, 73432 Aalen (DE)
(72) Erfinder: BETZLER, Michael, 73435 Abtsgmünd (DE); JAKUBETZ, Roland, 73433 Aalen (DE)
(74) Vertreter: Grünecker Patent- und Rechtsanwälte PartG mbB
(86) Internationale Anmeldenummer: PCT/EP2012/053758
(87) Internationale Veröffentlichungsnummer: WO 2012/126717

(56) Entgegenhaltungen:
- AT-U1- 1 926
- DE-U1- 7 816 580
- US-A- 2 777 284
- US-A- 5 343 912

## Beschreibung

Die Erfindung betrifft eine Vorrichtung zum Anschlagen eines Endgliedes eines Kettenstranges aus Kettengliedern vorbestimmter Geometrie, mit wenigstens einer Halteeinrichtung, die wenigstens einen in eine Öffnung des Endgliedes einführbaren Einführabschnitt an wenigstens einem Ende und wenigstens einen Halteabschnitt aufweist, wobei der Halteabschnitt einen Querschnitt aufweist, auf den das Endglied in einer begrenzten Anzahl von Haltestellungen vom Einführabschnitt her aufschiebbar ist, und mit wenigstens einem Verschlusselement, durch die das Endglied auf der Halteeinrichtung unverliebar sicherbar ist. Die erfindungsgemäße Vorrichtung ist insbesondere für Rund- oder Profilstahlketten gedacht.

Zum Anschlagen von Endgliedern eines Kettenstranges sind beispielsweise Verbindungsschlösser bekannt. Derartige Verbindungsschlösser zeigen die DE 28 05 917 A1, DE 38 03 250 C1, DE 82 466 U1, DE 31 d 970 A1, DE 33 14 075 A1, DE 81 36 770 U1, DE 196 19 831 A1 und DE 1 976 021 U1. Die Verbindung von Endglied und Verbindungsschloss weist bei diesen Verbindungsschlössern dieselbe Beweglichkeit auf wie die Verbindung zwischen zwei Kettengliedern. Problematisch sind diese Verbindungsschlösser bei Kettenverbindungen höherer Güteklassen, insbesondere bei Güteklassen über 8 mit einer Kettenbruchspannung von mehr als 800 N/mm². Die Verbindungsschlösser erreichen derartige Bruchspannungen oft nicht.

Das Erreichen hoher Bruchspannungen bei Verbindungsschlössern geht oft mit einer eingeschränkten Beweglichkeit zwischen Endglied und Verbindungsschloss einher. So können die Endglieder bei den Verbindungsschlössern der DE 197 43 025 C1, DE 20 2004 009 459 U1 und EP 1 620 640 B1 nur in einer Richtung verschwenkt werden.

Für Anwendungen der höchsten Güteklassen hat sich daher eine Bauform von Verbindungsschlössern bewährt, wie sie beispielsweise in der AT 001 926 U1 gezeigt sind und als Verbindungsglieder "Connex" der Firma Pewag und als Verbindungsschlösser VVS der Firma RUD auf dem Markt verfügbar sind. Von dem Verbindungsglied "Connex" in der Variante CBP für Profilketten der Güteklasse 12 ist im Folgenden als nächstkommender Stand der Technik ausgegangen, wobei die Erfindung nicht auf Profilketten beschränkt ist, sondern insbesondere auch die Anwendung für Rundstahlketten ins Auge fasst.

Nachteilig bei dem nächstkommenden Stand der Technik ist die große Gefahr des Verkantens. Insbesondere bei hohen Lasten besteht die Gefahr, dass sich das Endglied auf eine Kante des Halteabschnitts dreht und dann verklemmt. Weil das verklemmte Endglied Änderungen der Lastrichtung nicht mehr folgen kann, erhöht sich die Bruchgefahr.

Aus der US 5,343,912 ist bekannt, ein Anschlusselement für eine Kette, die zum Entfernen von Rinde von Baumstämmen benutzt wird, so auszugestalten, dass es zusammen mit speziell ausgestalteten Kettengliedern der Kette über eine bestimmte Abfolge von Relativstellungen verbindbar ist, wodurch ein zufälliges Herausfallen der Kette aus dem offenen Anschlusselement erschwert ist. Aus der US 2,777,284 ist ein zweiteiliges Kettenverbindungselement bekannt, bei dem jeweils ein als Aufnahme ausgestalteter Schenkel des einen Kettengliedes mit einem Schenkel des anderen Kettengliedes verbunden wird, wobei die beiden Schenkel mittels eines durchgesteckten Bolzens aneinander gesichert werden und eine Rotation der beiden Schenkel durch nicht kreisförmige Ausgestaltung der Aufnahme und des Gegenschenkels verhindert ist. Aus der AT 001 926 U1 ist ein Verbindungsglied bekannt, bei dem zwei Hälften im Bereich der Schenkel verbunden sind, wobei wieder ein Schenkel des einen Kettengliedes in eine Aufnahme des anderen Kettengliedes hineinragt und die Verbindung der beiden durch einen Bolzen gesichert ist, der zwischen den beiden Schenkeln eine Sicherungshülse aufweist, die ein Verrutschen des Bolzens verhindert. Die DE 78 16 580 U1 zeigt ein Kettenschloss für Rundstahlketten.

Um die Gefahr des Verkantens oder Verklemmens des an der Vorrichtung gehaltenen Endgliedes zu verhindern, ist für die eingangs genannte Vorrichtung vorgesehen, dass das Verschlusselement einen Anschlag bildet, durch den eine Bewegung des Endgliedes aus dem Halteabschnitt in Richtung des Einführabschnittes blockiert ist.

Durch diese Maßnahme wird verhindert, dass sich das Endglied aus dem Halteabschnitt bewegen und somit die wenigstens eine vorbestimmte Haltestellung verlassen kann. Dadurch wird die beim nächstkommenden Stand der Technik bestehende Gefahr gebannt, dass das Endglied im Betrieb bei einem Richtungswechsel der Last, insbesondere beim Ablegen und Wiederanheben des Kettenstranges, in einen Bereich gelangen kann, in der es sich aus der Haltestellung drehen und bei einem erneuten Richtungswechsel der Last am Halteabschnitt verklemmen kann.

Um Fehlbedienungen zu vermeiden und ein Abfallen des Endgliedes von der Halteeinrichtung vor Anbringung des Verschlusselementes zu vermeiden, weist der Einführabschnitt einen Querschnitt auf, auf den das Endglied des Kettenstranges in einer begrenzten Anzahl von Einführstellungen aufschiebbar ist. Durch diese Maßnahmen kann das Endglied von der Halteeinrichtung nur entfernt werden, wenn das Endglied eine Einführstellung einnimmt.

Aufgabe der Erfindung ist es, eine Vorrichtung bereitzustellen, die insbesondere für den Hochlastbereich geeignet ist.

Diese Aufgabe wird dadurch gelöst, dass lediglich eine einzige Einführstellung vorhanden ist, so dass der Querschnitt des Einführabschnittes möglichst groß ist und an die Form des Endgliedes angepasst werden kann. Dies ist insbesondere dann sinnvoll, wenn der Einführabschnitt als Befestigungsorgan dient, mit dem die Halteeinrichtung an einem Träger, beispielsweise einer Oberfläche einer Last oder einem anderen Anschlagmittel, befestigt werden kann.

Durch eine Reihe der im Folgenden beschriebenen, jeweils für sich vorteilhaften und beliebig miteinander kombinierbaren Maßnahmen kann die Erfindung weiter verbessert werden.

So kann gemäß Anspruch 1, lediglich eine einzige Haltestellung vorgesehen sein, in der das Endglied mit dem Kettenstrang auf den Halteabschnitt aufschiebbar ist. Diese Ausgestaltung ermöglicht eine optimale Anpassung des Querschnittes des Halteabschnittes an die Lastsituation und die Form des Endgliedes. Außerdem wird ein fehlerhaftes Aufschieben des Endgliedes auf den Halteabschnitt vermieden.

Die Gefahr eines Abfallens des Endgliedes von der Halteeinrichtung kann ferner dadurch vermieden werden, dass wenigstens eine oder die Einführstellung gegenüber der wenigstens einen oder der Haltestellung gedreht ist. Bei dieser Ausgestaltung muss das Endglied zunächst von der Haltestellung in die Einführstellung gedreht werden, bevor es entfernt werden kann. Diese Drehung kann insbesondere in der Ebene des Endgliedes erfolgen. Ein Drehwinkel von 90° zwischen der Einführ- und der Haltestellung hat sich als sicher erwiesen.

Um eine Drehung von der Einführ- in die Haltestellung und gegebenenfalls wieder zurück zu ermöglichen, kann die Halteeinrichtung zwischen dem Einführ- und dem Halteabschnitt einen Übergangsabschnitt aufweisen, auf dem das Endglied um eine quer zur Endgliedebene verlaufende Achse drehbar aufnehmbar ist. Die Drehbarkeit des Endgliedes auf dem Übergangsabschnitt kann beispielsweise dadurch erreicht werden, dass der Übergangsabschnitt an keiner Stelle dicker ist als die lichte Weite einer Öffnung des Endgliedes.

Um die Gefahr des Verkantens in der Haltestellung und/oder Einführstellung zu verringern, ist es von Vorteil, wenn der Halte- und/oder der Einführabschnitt eine Tiefe aufweisen, die höchstens der Differenz von Teilung und Materialstärke des Endgliedes entspricht. Die Tiefe ist ferner bevorzugt größer als die Hälfte der Teilung des Endgliedes. Die Teilung des Kettenstranges entspricht der Länge der Öffnung des Endgliedes in deren Längserstreckung. Durch eine große Tiefe können der Halte- und/oder der Einführabschnitt das Endglied exakter in Richtung quer zu dessen Ebene geradlinig führen. Durch die große Tiefe wird ferner verhindert, dass das Endglied bei großen Lasten auf Kanten oder Ecken des Halte- und/oder Einführabschnittes unter deren Verformung auflaufen und dort verklemmen kann.

Damit das Endglied einen Richtungswechsel der Last in diejenige Richtung, in der der Halteabschnitt sperrt, folgen kann, ist gemäß einer vorteilhaften Weiterbildung vorgesehen, dass die Halteeinrichtung in dieser Richtung schwenkbar an einem Träger gehalten ist. Diese Richtung kann insbesondere quer zu einer von der Halteeinrichtung aufgespannten Ebene verlaufen.

Unabhängig von der vorangehenden Weiterbildung werden dieselben Vorteile erzielt, wenn in einer weiteren vorteilhaften Ausgestaltung die Summe aus der Materialstärke des Kettenstranges und der Tiefe des Querschnittes von Halte- und/oder Einführabschnitt, jeweils gemessen in Richtung der Längserstreckung der Innenöffnung des auf den Halteabschnitt aufgeschobenen Endgliedes, wenigstens 90 % der Teilung beträgt. Um das Endglied mit dem Kettenglied auf den Halteabschnitt schieben zu können, ist bevorzugt die obige Summe aus der Materialstärke und der Tiefe kleiner als die Teilung.

Um den Querschnitt von Einführ- und/oder Halteabschnitt möglichst groß zu gestalten und somit bei hohen Lasten die im Querschnitt wirkenden Spannungen zu reduzieren, kann der Querschnitt von Einführ- und/oder Halteabschnitt zwei unterschiedlich stark gekrümmte Schmalseiten aufweisen. Die Querschnittskontur kann insbesondere weitgehend der lichten Kontur der Öffnung des am Kettenstrang angebrachten Endgliedes entsprechen, wobei die lichte Kontur nicht den Querschnitt des im Endglied eingehängten Kettengliedes umfasst. Auf kleine Radien kann bei der Querschnittskontur aufgrund der dort herrschenden Verformungsgefahr und aufgrund ihres geringen Beitrages zur Gesamtfestigkeit verzichtet werden. Die dem Kettenglied in der Öffnung des Endglieds zugewandte Schmalseite des Halteabschnittes kann schwach konvex gekrümmt sein. Alternativ kann sie auch eine zum Querschnitt der Kettenglieder komplementäre konvexe Krümmung aufweisen.

Die Krümmung einer Schmalseite des Querschnittes von Einführ- und/oder Halteabschnitt kann insbesondere der Krümmung an einem Ende der Öffnung des Endgliedes wenigstens etwa entsprechen. Bei dieser Ausgestaltung schmiegen sich Einführ- und/oder Halteabschnitt innen an den Bug des Kettengliedes. Dies bewirkt eine exaktere Führung des Kettengliedes entlang des Einführ- und/oder Halteabschnitts und vergrößert den spannungsaufnehmenden Querschnitt. Gleichzeitig werden hohe Flächenpressungen verhindert.

Gemäß einer weiteren vorteilhaften Ausgestaltung kann eine schwächer gekrümmte Schmalseite des Querschnittes von Halte- und/oder Einführabschnitt bei aufgeschobenem Endglied dem Kettenstrang zugewandt sein. Durch die schwache Krümmung dieser Schmalseite wird insbesondere bei Rundstahlketten eine gute Beweglichkeit des an das Endglied angeschlagenen Kettengliedes des Kettenstranges gegenüber dem Endglied und dem Halte- und/oder Einführabschnitt erreicht, da die Reibungsflächen zwischen diesem Kettenglied und der Schmalseite von Einführ- und/oder Halteabschnitt klein sind. Weist das Endglied, wie bei einer Profilstahlkette, einen Querschnitt mit flachen Seiten auf, so kann eine stärkere Krümmung der dem Endglied zugewandten Schmalseite gewünscht sein, um die Kontaktfläche klein zu halten.

Damit das Endglied bei angebrachtem Verschlusselement nicht die Haltestellung verlassen kann, ist gemäß einer besonders vorteilhaften Ausgestaltung vorgesehen, dass das Verschlusselement bzw. dessen Anschlag in Verschieberichtung des Endgliedes vom Halte- zum Einführabschnitt weniger als eine Materialstärke des Endgliedes vom Halteabschnitt beabstandet ist.

Um bei hohen Lasten, die in Richtung vom Halte- zum Einführabschnitt auf den Kettenstrang wirken, Verformungen und/oder Beschädigungen des Verschlusselements bzw. des Endgliedes zu vermeiden, kann die zum Halteabschnitt weisende Kontur des Anschlages der Außenkontur eines am Anschlag anliegenden, auf den Halteabschnitt aufgeschobenen Endgliedes oder des in das Endglied eingehängten Kettengliedes im Wesentlichen folgen. Bei dieser Ausgestaltung schmiegt sich das Endglied oder das sich darin befindliche Kettenglied an den Anschlag an, so dass nur geringe Flächenpressungen entstehen können.

Um sicherzustellen, dass das Endglied mit dem Kettenstrang in lediglich einer einzigen Halte- und/oder Einführstellung auf die Halteeinrichtung aufgeschoben werden kann, kann sich eine Außenkontur, die sich aus dem an einer Schmalseite des Querschnittes von Einführ- und/oder Halteabschnitt angeordneten Querschnitt eines Kettengliedes des Kettenstranges und dem Querschnitt von Einführ- und/oder Halteabschnitt ergibt, in die Öffnung des Endgliedes einschreibbar sein, während eine Außenkontur, die sich aus dem an einer anderen Schmalseite des Querschnittes von Einführ- und/oder Halteabschnitt angeordneten Querschnitt eines Kettengliedes des Kettenstranges und dem Querschnitt von Einführ- und/oder Halteabschnitt ergibt, in die Öffnung des Endgliedes nicht einschreibbar ist. In dieser Ausgestaltung kann also das Endglied nur dann auf den Einführ- und/oder Halteabschnitt aufgeschoben werden, wenn sich das an das Endglied anschließende Kettenglied an einer bestimmten Schmalseite des Querschnittes von Einführ- und/oder Halteabschnitt befindet.

Im Stand der Technik ist der Einführabschnitt, der gleichzeitig der Befestigung der Halteeinrichtung auf einem Träger dienen kann, bevorzugt durch Schmieden hergestellt. Gelenkflächen, an denen die Halteeinrichtung schwenk- oder drehbar geführt ist, können im Übrigen von einer Bohrung durchsetzt sein, in der ein Achs- oder Haltestift oder Bolzen eingesetzt ist oder werden kann. Der Achs- oder Haltestift oder Bolzen dient zur insbesondere schwenkbaren Befestigung. Der Achs- oder Haltestift kann einen als Verschlusselement dienenden Kopf aufweisen oder mit einem solchen Kopf verbunden sein.

Um die Handhabungssicherheit zu erhöhen, ist gemäß einer weiteren Ausgestaltung vorgesehen, dass das Verschlusselement nur dann an der Vorrichtung angebracht werden kann, wenn sich kein Endglied im Einführ- und/oder Übergangsabschnitt befindet. Dies kann dadurch erreicht werden, dass ein am Verschlusselement angeordneter Anschlag für das sich in einer Einführstellung außerhalb des Halteabschnitts befindliche Endglied bei an der Vorrichtung fertig montierten Verschlusselement weniger als eine Materialstärke des Endglieds vom Halteabschnitt entfernt ist. Befindet sich bei dieser Ausgestaltung das Englied nicht am Halteabschnitt und/oder nicht in der Haltestellung, so kann der Anschlag nicht in die Montagestellung bewegt werden. Der Abstand des Anschlags vom Halteabschnitt ist bevorzugt unabhängig von der relativen Winkelstellung zwischen Verschlusselement und Halteabschnitt. Hierzu kann sich der Anschlag um die Schwenkachse des Halteabschnitts herum erstrecken.

Die erfindungsgemäße Vorrichtung kann mit einem im Wesentlichen bogenförmigen Halteabschnitt versehen sein und als Schäkel oder Anschlagöse eingesetzt werden. Femer können zwei identisch aufgebaute Halteeinrichtungen zu einem Verbindungsschloss zusammengesetzt sein.

Im Folgenden ist die Erfindung anhand von Ausführungsbeispielen mit Bezug auf die Zeichnungen näher erläutert. Die Erläuterung dient lediglich als beispielhafte Darstellung und die in den Ausführungsbeispielen unterschiedlichen Merkmale können nach Maßgabe der obigen Ausführungen beliebig weggelassen oder kombiniert werden, sofern es auf den mit diesem Merkmal verbundenen Vorteil nicht ankommt. In allen Figuren sind im Folgenden für hinsichtlich Funktion und/oder Aufbau ähnliche und/oder identische Bauteile dieselben Bezugszeichen verwendet.

Es zeigen:
- Fig. 1: eine schematische Draufsicht auf ein erstes Ausführungsbeispiel einer erfindungsgemäßen Vorrichtung;
- Fig. 2: eine schematische Darstellung der Vorrichtung der Fig. 1 in einem ersten Montageschritt;
- Fig. 3A: eine erste Variante eines Querschnitts entlang der Linie III-III der Fig. 2 in einer schematischen Darstellung;
- Fig. 3B: eine zweite Variante eines Querschnitts entlang der Linie III-III der Fig. 2 in einer schematischen Darstellung;
- Fig. 4: eine schematische Darstellung der Vorrichtung der Fig. 1 in einem zweiten Montageschritt;
- Fig. 5: einen Schnitt entlang der Linie V-V der Fig. 2 in einer schematischen Darstellung;
- Fig. 6: eine schematische Darstellung der Vorrichtung der Fig. 1 in einem dritten Montageschritt;
- Fig. 7: einen Querschnitt entlang der Linie VIII-VIII der Fig. 2 in einer schematischen Darstellung;
- Fig. 8: eine schematische Darstellung der Vorrichtung der Fig. 1 in einem vierten Montageschritt;
- Fig. 9: einen Querschnitt entlang der Linie IX-IX der Fig. 2 in einer schematischen Darstellung;
- Fig. 10A: eine schematische Darstellung des Querschnitts der Fig. 9 zur Erläuterung der Querschnitte;
- Fig. 10B: eine zweite Variante eines Querschnitts entlang der Linie IX-IX der Fig. 2 in einer schematischen Darstellung;
- Fig. 11: ein weiteres Ausführungsbeispiel der erfindungsgemäßen Vorrichtung in einer schematischen Schnittdarstellung;
- Fig. 12: eine schematische Schnittdarstellung des Ausführungsbeispiels der Fig. 1 in einer weiteren Betriebsstellung;
- Fig. 13: eine schematische Darstellung des Ausführungsbeispiels der Fig. 1 in einer weiteren Betriebsstellung;
- Fig. 14: eine schematische Darstellung des Ausführungsbeispiels der Fig. 1 in einer weiteren Betriebsstellung;
- Fig. 15: ein weiteres Ausführungsbeispiel der erfindungsgemäßen Vorrichtung in einer schematischen Darstellung.

Zunächst wird der Aufbau einer Vorrichtung 1 zum Anschlagen eines Endgliedes 2 eines Kettenstranges 3 beschrieben. Der Kettenstrang 3 ist aus im Wesentlichen ringförmig geschlossenen Kettengliedern 4 aufgebaut, die kurz oder langgliedrig sein können. Der Kettenstrang 3 kann insbesondere eine Rundstahlkette oder eine Profilkette sein. Die Geometrie der Kettenglieder 4 ergibt sich bevorzugt aus einschlägigen Normen, beispielsweise DIN EN 818-4.

Die Geometrie der Vorrichtung 1 ist durch die Geometrie der Kettenglieder 4 vorgegeben bzw. vorbestimmt. Die Vorrichtung 1 wird vorzugsweise jeweils nur für einen ganz bestimmten Typ und einer ganz bestimmten Größe eines Kettenstranges 3 eingesetzt.

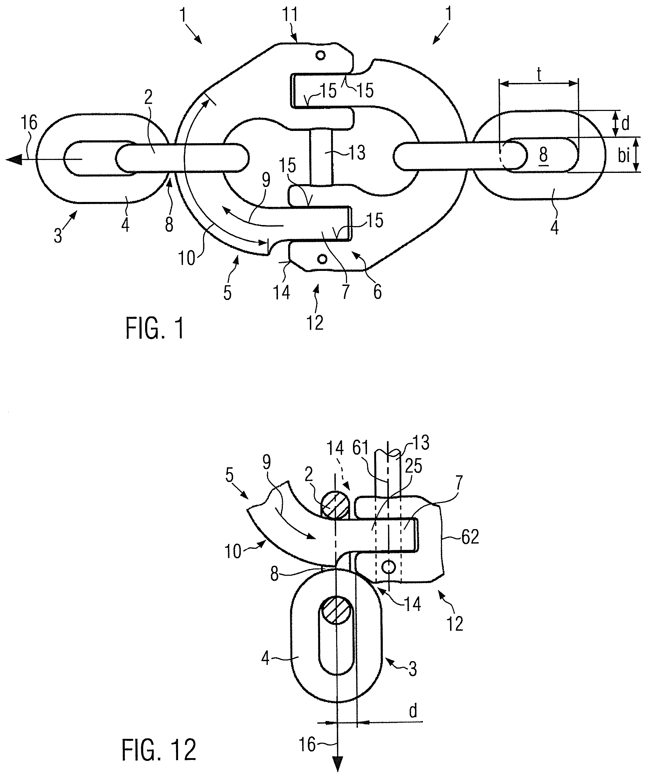

Lediglich beispielhaft zeigt Fig. 1, dass zwei identische Vorrichtungen 1 spiegelverkehrt schwenkbar miteinander verbunden sind und ein Verbindungsschloss für zwei Kettenstränge 3 bilden.

Die Vorrichtung wird im Folgenden anhand der in Fig. 1 linken Vorrichtung 1 erläutert. Für die in Fig. 1 rechte Vorrichtung gilt die folgende Beschreibung entsprechend.

Die Vorrichtung 1 weist eine Halteeinrichtung 5 auf, die bügelförmig ausgestaltet sein und auf die das Endglied 2 aufgeschoben werden kann.

Die Halteeinrichtung 5 weist an wenigstens einem Ende 6 einen Einführabschnitt 7 auf, der in eine Öffnung 8 des Endgliedes 2 einführbar ausgestaltet ist. In einer Verschieberichtung 9 des Endgliedes 2 hinter dem Einführabschnitt 7 befindet sich ein Halteabschnitt 10, auf dem das Endglied 2 im Betrieb aufgeschoben ist und der die im Betrieb auftretenden Lasten aufnimmt. Das Endglied 2 ist entlang des Halteabschnittes 10 verschiebbar, kann aber nicht um eine in Richtung des Halteabschnitts 10 weisende Achse gedreht werden.

Wie weiter unten näher erläutert ist, ist bevorzugt das Endglied 2 nur in einer vorbestimmten, begrenzten Anzahl von Stellungen auf den Einführabschnitt 7 und den Halteabschnitt 10 aufschiebbar.

Das andere Ende 11 der Halteeinrichtung 5 muss keinen Einführabschnitt 7 aufweisen, sondern kann, wie Fig. 1 zeigt, verdickt, beispielsweise gabelförmig, ausgestaltet sein, um die Lastaufnahme zu verbessern. Das andere Ende 11 kann ebenfalls als Befestigungselement dienen, um die Halteeinrichtung 5 an einem Träger vorzugsweise schwenkbar anzubringen.

Die Vorrichtung 1 weist ferner ein Verschlusselement 12 auf, durch das eine Bewegung des Endgliedes 2 aus dem Halteabschnitt 10 in Richtung des Einführabschnittes 7 blockiert ist. Bei dem in Fig. 1 dargestellten Ausführungsbeispiel bilden die beiden spiegelbildlich aneinander montierten Vorrichtungen 1 jeweils gegenseitig das Verschlusselement 12. Alternativ kann natürlich das Verschlusselement 12 auch von einem anderen Element, beispielsweise einem Achsstift 13, durch den die Vorrichtung 1 an einem Träger befestigt ist, gebildet sein.

Das Verschlusselement 12 kann den Einführabschnitt 7 wenigstens abschnittsweise überlappen bzw. abdecken. Das Verschlusselement 12 kann ferner einen zum Halteabschnitt 5 bzw. in Verschieberichtung weisenden Anschlag 14 ausformen, gegen den der Kettenstrang 3 schlägt, bevor das Endglied 2 sich aus dem Halteabschnitt bewegen kann. Schließlich kann das Verschlusselement 12 drehbar gegenüber der Halteeinrichtung sein.

Die Enden 6, 11 der Halteeinrichtung 1 können plane Gelenkflächen 15 aufweisen.

Das Endglied 2 ist entlang des Halteabschnittes 10 - entlang der Verschieberichtung 9 - verschieblich gehalten. Änderungen der Lastrichtung 16 kann es durch eine Bewegung in Verschieberichtung 9 und durch eine Schwenkbewegung der Halteeinrichtung 5 gegenüber dem Träger folgen.

In Fig. 1 sind beim rechten Kettenglied 4 die bei Kettensträngen typischerweise genormten Maße eingezeichnet. Die Teilung t entspricht der maximalen Länge der Öffnung 8 des Kettengliedes in Lastrichtung 16 bzw. in Richtung seiner Längserstreckung. Quer zur Lastrichtung 16 bzw. Längserstreckung erstreckt sich die innere Breite bᵢ der Öffnung 8. Die Materialstärke d ist ein Dickenmaß für das Draht- oder Stangenmaterial, aus dem das Kettenglied 4 gefertigt sein kann.

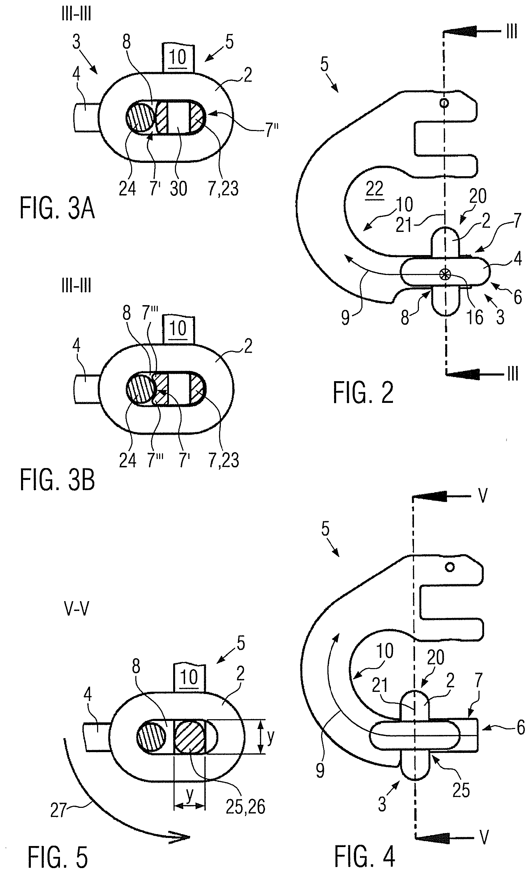

Mit Bezug auf die Fig. 2 bis 10 ist das Aufschieben des Endgliedes 2 auf den Halteabschnitt 10 der Halteeinrichtung 5 näher erläutert.

Fig. 2 zeigt das Endglied 2 in einer Einführstellung 20, in der es auf den Einführabschnitt 7 aufgeschoben wird.

In der Einführstellung 20 erstreckt sich eine vom Endglied 2 bzw. seiner Öffnung 8 aufgespannte Ebene 21 senkrecht zu einer Ebene 22 der Halteeinrichtung 5, in der die Lastrichtung 13 (vgl. Fig. 1) liegt. Die Ebene 22 wird bei einem gebogenen oder bügelförmigen Verlauf des Halteabschnittes 10 von diesem aufgespannt.

In Fig. 3A ist zu erkennen, dass sich in der Öffnung 8 des Endgliedes 2 ein Querschnitt 23 des Einführabschnittes 7 und ein Querschnitt 24 des in das Endglied 2 eingehängten Kettengliedes 4 zusammen so ergänzen, dass das Endglied 2 mitsamt dem Kettenstrang 3 in lediglich einer einzigen Einführstellung auf den Einführabschnitt 7 aufschiebbar ist. Ist das Endglied 2 in seiner Ebene 21 gegenüber der Einführstellung gedreht oder steht es nicht senkrecht auf den Einführabschnitt 7, kann dieser nicht in die Öffnung 8 eingeschoben werden, weil er mit dem Endglied 2 oder Kettenglied 4 kollidiert. Bei der Fig. 3A ist die dem Kettenglied 4 zugewandte Schmalseite 7' ebenso wie die vom Kettenglied 4 abgewandte Schmalseite 7" nach außen gewölbt. Die ballige Schmalseite 7' steht in einem punktuellen Kontakt mit dem Kettenglied 4. Die andere Schmalseite 7" schmiegt sich in die Rundung der Öffnung 8.

Eine Variante zu dem in Fig. 3A dargestellten Querschnitt des Einführabschnittes 7 ist in Fig. 3B dargestellt. Diese Variante unterscheidet sich durch die Ausgestaltung der dem Kettenglied 4 zugewandten Schmalseite 7', die bei dieser Variante nach innen gewölbt, also konkav ist. Die Krümmung der Schmalseite 7' entspricht genau oder in etwa der Krümmung der Querschnittsfläche 24 des Kettengliedes 4, so dass sich das Kettenglied 4 in die Schmalseite 7' des Einführabschnittes 7 schmiegen kann.

Quer zur Längserstreckung des Endgliedes 2 überlappen sich der Querschnitt 23 des Einführabschnittes 7 und des Kettengliedes 24, so dass das Kettenglied 4 in der Öffnung 8 aufgrund der konkaven Krümmung der Schmalseite 7' zwischen den abgerundeten Ecken 7‴ und der Krümmung der Öffnung 8 gehalten ist. Die Schmalseite 7' und die Krümmung der Öffnung 8 bilden eine lagerartige Aufnahme, um die das Kettenglied 4 in der Ebene der Öffnung 8 gegenüber dem Endglied 2 verschwenkbar ist.

Wie bei der Ausführungsform der Fig. 3A ist auch bei der Ausführungsform der Fig. 3B sichergestellt, dass das Endglied 2 nur in der gezeigten Querschnittskombination auf den Einführabschnitt 7 aufgeschoben werden kann. Liegt der Querschnitt 24 des Endgliedes 4 nicht an der konkaven Schmalseite, so lässt das Kettenglied 2 nicht aufschieben.

Wird das Endglied 2 in Verschieberichtung 9, die im Wesentlichen dem Verlauf der Halteeinrichtung 5 folgt, weiter auf die Halteeinrichtung 5 aufgeschoben, so wird die in Fig. 4 dargestellte Position erreicht, in der sich das Endglied nach wie vor in der Einführstellung 20 befindet, jedoch kurz vor dem Halteabschnitt 10 angelangt ist. An dieser Stelle, zwischen dem Einführabschnitt 7 und dem Halteabschnitt 10, kann ein Übergangsabschnitt 25 ausgebildet sein, dessen sich in der Öffnung 8 des Endgliedes 2 befindlicher Querschnitt 26 gegenüber dem Querschnitt des Einführabschnittes 7 verändert, insbesondere verkleinert ist.

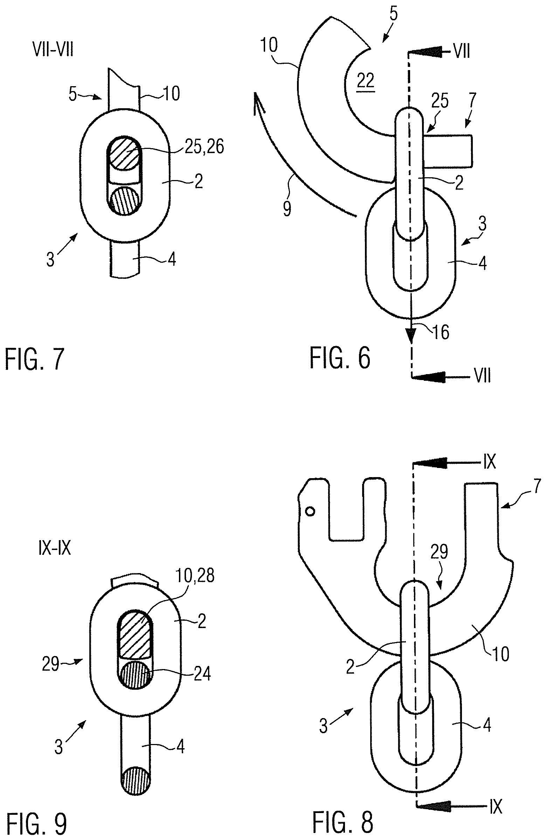

Die Materialstärke y des Querschnitts 26 ist insbesondere an keiner Stelle größer als die kleinste lichte Weite bᵢ der Öffnung 8, so dass das Endglied 2 auf dem Übergangsabschnitt 25 in seiner Ebene 21 gedreht werden kann, wie dies in Fig. 5 durch den Pfeil 27 angedeutet ist. Nach der Drehung um bevorzugt 90° in Richtung des Pfeils 27 ist die in den Fig. 6 und 7 dargestellte Stellung erreicht, in der die Lastrichtung 16 bzw. die Richtung des Kettenstranges 3 in der bevorzugt schwenkbaren Ebene 22 liegt.

Nun kann das Endglied 2 auf den Halteabschnitt 10 in Verschieberichtung 9 aufgeschoben werden.

Die Fig. 8 und 9 zeigen das Endglied 2 mit dem Kettenstrang 3 auf dem Halteabschnitt 10. Wie in der Schnittdarstellung der Fig. 9 zu erkennen ist, ergänzen sich vorzugsweise auch beim Halteabschnitt 10 dessen Querschnitt 28 und der Querschnitt 24 des in das Endglied 2 eingehängten Kettengliedes 4 so, dass das Endglied 2 mit dem Kettenglied 4 nur in einer einzigen Haltestellung 29 auf den Halteabschnitt 10 aufschiebbar ist.

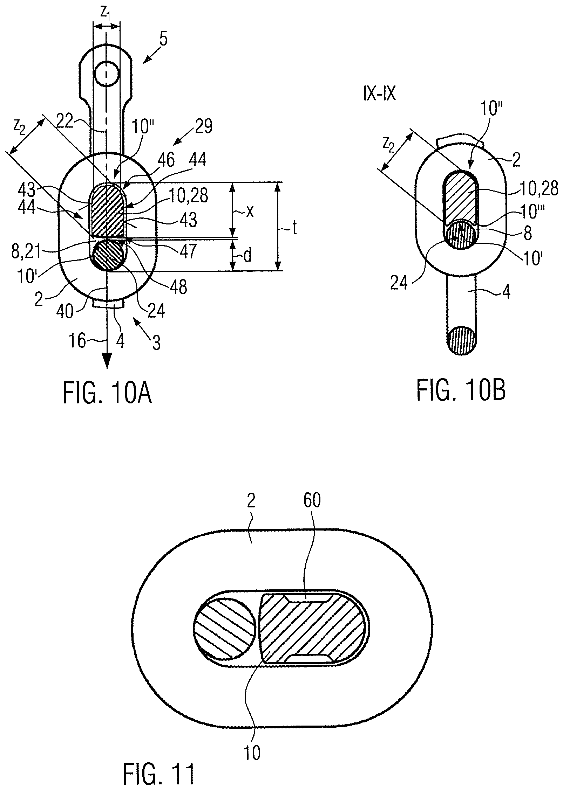

Die Querschnitte 23, 28 von Einführabschnitt 7 und Halteabschnitt 8 können wenigstens etwa identisch ausgebildet sein. Sie sind hinsichtlich Aufbau und Funktion in Bezug auf die in Fig. 10A dargestellte Querschnittsvariante des Halteabschnittes näher erläutert, wobei der Einfachheit halber lediglich der Querschnitt 28 des Halteabschnittes 10 erläutert ist. Bevorzugt gelten die folgenden Erläuterungen auch für den Querschnitt des Einführabschnittes 7, wobei dieser allerdings, wie oben beschrieben, Gelenkflächen 15 an den Längsseiten sowie eine Bohrung 30 (vgl. Fig. 3A, 3B) aufweisen kann.

Der Querschnitt 28 bildet eine Linearführung für das Endglied 2 entlang der Verschieberichtung 9 (vgl. Fig. 1). Die Linearführung unterbindet eine Drehung des Endgliedes 2 in dessen Ebene 21 um den Querschnitt 28 und bevorzugt auch eine zu starke Schwenkbewegung aus dieser Ebene heraus. Die Querschnittsform führt dazu, dass die Lastrichtung 16 bzw. die Mittellinie 40 des Endgliedes 2 in dessen Längsrichtung stets in der Ebene 22 verbleibt. Um ein Verkanten und/oder Verklemmen des Endgliedes 2 am Querschnitt 28 zu vermeiden, weist der Halteabschnitt 10 eine Tiefe x in der jeweiligen Lastrichtung 16 auf, die insbesondere größer als die Hälfte einer Teilung t des Kettenstranges 3 und kleiner als die Differenz von Teilung t und einer Materialstärke d des Kettengliedes 4 ist.

Vorzugsweise bildet der Halteabschnitt wenigstens zwei zueinander parallele Führungsflächen 43, welche die beiden Längsseiten 44 des Halteabschnittes 10 bilden. Die Führungsflächen 43 sind den geraden Innenseiten der Öffnung 8 zugeordnet. Sie erstrecken sich bevorzugt in Längsrichtung des Endgliedes 2 ebenfalls über mehr als die Hälfte der Teilung t.

Die sich gegenüberliegenden Schmalseiten 10', 10" des Halteabschnittes 10, die an der Stelle des Endgliedes 2 bevorzugt in bzw. entgegen der Lastrichtung 16 weisen, können unterschiedlich stark gekrümmt sein. Die Krümmung der einen Schmalseite, bevorzugt ist dies die vom Kettenstrang 3 weg weisende Schmalseite 10", weist eine Krümmung nach außen auf, die der Krümmung der Öffnung 8 des Endgliedes 2 an deren Schmalseite entspricht. Somit schmiegt sich der konvexe Halteabschnitt 10 in die Öffnung 8 des aufgeschobenen Endgliedes 2.

Die in Lastrichtung 16 bzw. zum Kettenstrang 3 hin weisende Schmalseite 10' weist bevorzugt eine geringere konvexe Krümmung 47 als die andere, dem Bug des Endgliedes 2 zugewandte Schmalseite 10" auf, ist also bevorzugt flacher, aber auch ballig. Dadurch verringert sich die Größe einer Kontaktfläche 48 zwischen dem Kettenglied 4 mit seiner stark gekrümmten Oberfläche und dem Halteabschnitt 10.

Durch die unterschiedlich starke Krümmung wird außerdem erreicht, dass lediglich eine Haltestellung 29 existiert. Befindet sich nämlich das Kettenglied 4 nicht gegenüber der Schmalseite 45 mit der geringeren Krümmung 47, so lassen sich die beiden Querschnitte 24, 28 nicht mehr in die Öffnung 8 einschreiben bzw. der Halteabschnitt 10 nicht in die Öffnung 8 einführen.

In der Haltestellung 29 beträgt die Summe der Tiefe x des Halteabschnittes und der Materialstärke d des Kettengliedes 4 wenigstens 90% der Teilung t, um eine exakte Führung des Endgliedes 2 zu ermöglichen. Die Summe ist kleiner als die Teilung t.

In Fig. 10A ist ferner eine Dicke z₁ des Halteabschnittes 10 quer zur Lastrichtung 16 gezeigt. Die Dicke z₁ ist kleiner als die kleinste lichte Weite in Richtung der inneren Breite bᵢ der Öffnung 8, so dass der Querschnitt 28 in die Öffnung 8 eingeschoben werden kann. Die größte, in einer Diagonalrichtung verlaufende Querschnittsabmessung z₂ ist größer als eine größte lichte Weite in Richtung der inneren Breite bᵢ.

Fig. 10B zeigt eine Querschnittsvariante gegenüber dem in den Fig. 9 und 10A dargestellten Querschnitt 28 des Halteabschnittes 10. Die Querschnittsvariante der Fig. 10B entspricht in ihrer Grundform der in Fig. 3B beschriebenen Querschnittsvariante des Einführabschnittes 7 mit dem Unterschied, dass keine Bohrung 30 vorgesehen ist.

Die dem Kettenstrang 3 bzw. Kettenglied 4 zugewandte Schmalseite 10" des Querschnitts 28 ist konkav. Die Krümmung der konkaven Schmalseite 10' entspricht der Krümmung des Querschnittes 24 des Kettenglieds 4, so dass sich beide in der Öffnung 8 aneinander schmiegen, wie bereits oben zur Fig. 3B erläutert ist. Wie bei dem in Fig. 3B dargestellten Querschnitt bildet die konkave Krümmung der Schmalseite 10" zusammen mit der Krümmung der Öffnung 8 ein Drehlager für das Kettenglied 4.

Die Ausgestaltung der Fig. 10B (wie auch die der Fig. 3B) hat den Vorteil, dass die größte Querschnittsabmessung z₂ des Halteabschnittes 10 aufgrund der das Kettenglied 4 in der Öffnung 8 umgreifenden abgerundeten Ecken 10'" größer ist. Dadurch ist die Tiefe der Fläche, auf der das Endglied 2 auf dem Halteabschnitt 10 geführt ist, gegenüber der Ausführungsform der Fig. 10A vergrößert. Somit ist das Endglied 2 sicherer auf dem Halteabschnitt 10 geführt.

Um im Betrieb die Reibung zwischen dem Endglied 2 und dem Halteabschnitt 10 zu verringern, können gemäß einem weiteren Ausführungsbeispiel eine oder mehrere Ausnehmungen 60 an den dem Endglied 2 zugewandten Flächen des Halteabschnittes 10 angeordnet sein. Dies zeigt die Fig. 11. Durch die Ausnehmungen 60 wird eine mehrstellige Linearführung des Endgliedes 2 entlang des Halteabschnittes 10 erreicht. Die Ausnehmungen 60 erstrecken sich bevorzugt mit ihrer längeren Abmessung in Verschieberichtung 9. Die Ausnehmungen können im Schmiedeverfahren in einem Herstellschritt mit der Herstellung der Halteeinrichtung 5 hergestellt sein. Sie verringern die Kontaktfläche zwischen dem Endglied 2 und der Halteinrichtung 5, so dass diese einer Änderung der Lastrichtung 16 durch eine Bewegung entlang des Haltabschnittes 10 in Verschieberichtung 9 hin zu einem der Enden 6, 11 besser folgen kann. Außerdem erschweren die Ausnehmungen 60 die Ansammlung von Schmutz zwischen Endglied 2 und Halteabschnitt 10, der zu einer erhöhten Reibung zwischen Halteabschnitt und Endglied führen kann.

Die Funktion des Verschlusselements 12 ist anhand der Fig. 12 näher erläutert.

Bei einer Änderung der Lastrichtung 16 aus beispielsweise der in Fig. 1 dargestellten Richtung in der Ebene 22 hin zum Einführabschnitt 7 kann durch das Verschlusselement 12 erfindungsgemäß verhindert werden, dass das Endglied 2 den Halteabschnitt 10 verlässt. Hierzu ist der vom Verschlusselement 12 gebildete Anschlag 14 höchstens eine Materialstärke d in Verschieberichtung 9 vom Halteabschnitt 10 entfernt.

Der Anschlag 14 ist wenigstens auf der dem Halteabschnitt 10 zugewandten Seite des Verschlusselements 12 angeordnet, so dass er mit dem in das Endglied 2 eingehängten Kettenglied 4, vorzugsweise mit einer Außenseite des die Öffnung 8 durchsetzenden Buges des Kettengliedes 4 zusammenwirkt.

Alternativ kann, wie durch den gestrichelten Pfeil in Fig. 12 angedeutet ist, der Anschlag 14 auch direkt mit dem Endglied 2 zusammenwirken und beispielsweise auf der vom Kettenstrang 3 abgewandten Seite der Halteeinrichtung 5 angeordnet sein.

Der Anschlag 14 erstreckt sich bevorzugt im Wesentlichen kreissektorförmig um eine Achse 61, um die herum im Betrieb die Halteeinrichtung 5 gegenüber dem Träger 62 verschwenkbar ist. Auf diese Weise ist die Lage des Anschlages 14 unabhängig von der Relativlage der Halteeinrichtung 5 zum Träger 62.

Insbesondere blockiert das Verschlusselement 12 die Bewegung des Endgliedes 2 von dem Halteabschnitt 10 in den Übergangsabschnitt 25. Dort bestünde die Gefahr, dass sich das Endglied 2 in seiner Ebene 21 dreht und nicht mehr auf den Halteabschnitt zurückgeschoben werden kann.

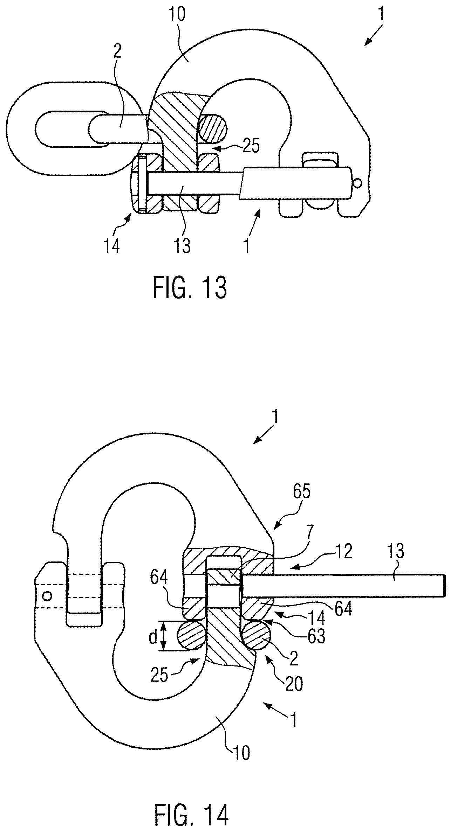

Fig. 13 zeigt die Vorrichtung 1 der Fig. 1 im abgewinkelten Zustand, bei dem die eine Vorrichtung relativ zur anderen Vorrichtung um den Achsstift 13 um 90° geschwenkt ist. Da der Anschlag 14 eine kreissektor- oder kreisringförmige Grundfläche aufweist, kann auch in der abgewinkelten Stellung das Endglied 2 nicht in den Übergangsabschnitt 25 gelangen, sondern verbleibt am Halteabschnitt 10. Dies ist unabhängig von der Winkellage der beiden Vorrichtungen 1 zueinander.

Fig. 14 zeigt, dass an einer Vorrichtung 1 ein Verschlusselement 14, hier eine weitere Vorrichtung 1, nur montiert werden kann, wenn sich das Endglied 2 im Halteabschnitt 10 befindet.

Dies wird dadurch erreicht, dass am Verschlusselement 12 ein dem Halteabschnitt 10 zugewandter Anschlag 63 vorgesehen ist, der um die Schwenkachse 61 weniger als eine Materialstärke d des Endgliedes 2 vom Halteabschnitt 10 entfernt ist und einen Anschlag für das Endglied 2 in der Einführstellung 20 bildet. Somit blockiert das Endglied 2 in der Einführstellung 20 die endgültige Montagestellung des Verschlusselements.

Die Anschlagfläche 63 erstreckt sich vorzugsweise zumindest abschnittsweise um die Schwenkachse 61, so dass unabhängig von der Winkelstellung des Verschlusselements gegenüber der Vorrichtung 1 die Montagestellung nicht erreicht werden kann.

Wie Fig. 14 ferner zeigt, ist bei zwei identischen, aneinander montierten Vorrichtungen 1 der Anschlag 63 von den Enden 64 eines dem Einführabschnitt 7 der jeweils anderen Vorrichtung 1 umgreifenden Gabelabschnittes 65 gebildet.

Wie bereits kurz mit Bezug auf Fig. 1 erläutert ist, kann die Vorrichtung 1 mit der Halteeinrichtung 5 und dem Verschlusselement 12 unterschiedlich ausgestaltet sein. Beispielsweise können entsprechend dem Ausführungsbeispiel der Fig. 1 zwei Halteeinrichtungen 5 miteinander verbunden sein und sich gegenseitig tragen. Die eine Halteeinrichtung 5 bildet dabei jeweils das Verschlusselement 12 für die andere Halteeinrichtung 5. Als Verschlusselement 12 dient dabei bevorzugt jeweils das andere Ende 11, das eine Gabel zur Aufnahme des Einführabschnittes 7 der jeweils anderen Halteeinrichtung 5 bildet.

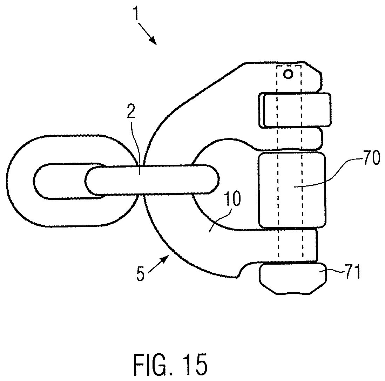

Alternativ kann die Halteeinrichtung 5 auch beispielsweise Teil eines Schäkels als Vorrichtung bilden oder als Anschlagpunkt dienen, der an einer Oberfläche eines Transportgutes fest angebracht ist. Fig. 15 zeigt beispielhaft die Verwendung als Schäkel. Die Halteeinrichtung 5 ist durch einen Schäkelbolzen 70 verschlossen. Der Schäkelbolzen 70 kann einen Kopf 71 aufweisen oder mit einem Kopf 71 verbunden sein, der die Bewegung des Endgliedes 2 aus dem Halteabschnitt 10 blockiert, wie dies in Fig. 15 schematisch gezeigt ist und als Verschlusselement dient.

Wird die Vorrichtung 1 als Anschlagpunkt verwendet, so kann das Verschlusselement 71 von einem aufgeschweißten Auge gebildet sein.

### Bezugszeichenliste

- 1: Vorrichtung
- 2: Endglied
- 3: Kettenstrang
- 4: Kettenglied
- 5: Halteeinrichtung
- 6: Ende der Halteeinrichtung
- 7: Einführabschnitt
- 7': Schmalseite des Einführabschnitts
- 7": Schmalseite des Einführabschnitts
- 7'": Ecken
- 8: Öffnung
- 9: Verschieberichtung
- 10: Halteabschnitt
- 10': Schmalseite des Halteabschnitts
- 10": Schmalseite des Halteabschnitts
- 10‴: Schmalseite des Halteabschnitts
- 11: anderes Ende der Halteeinrichtung
- 12: Verschlusselement
- 13: Achsstift
- 14: Anschlag
- 15: Gelenkfläche
- 16: Lastrichtung
- 20: Einführstellung
- 21: Ebene des Endgliedes
- 22: Ebene des Halteabschnittes, Lastebene
- 23: Querschnitt des Einführabschnittes
- 24: Querschnitt des Kettengliedes
- 25: Übergangsabschnitt
- 26: Querschnitt des Übergangsabschnittes
- 27: Pfeil
- 28: Querschnitt des Halteabschnittes
- 29: Haltestellung
- 30: Bohrung
- 40: Mittellinie des Endgliedes in Längsrichtung
- 43: Führungsflächen des Halteabschnittes
- 44: Längsseiten des Halteabschnittes
- 46: Krümmung der einen Schmalseite
- 47: Krümmung der anderen Schmalseite
- 48: Kontaktfläche zwischen Kettenglied und Halteabschnitt
- 60: Ausnehmung
- 61: Schwenkachse der Halteeinrichtung
- 62: Träger
- 63: Anschlag
- 64: Enden
- 65: Gabelabschnitt
- 70: Schäkelbolzen
- 71: Kopf
- bᵢ: innere Breite der Öffnung
- d: Materialstärke des Kettengliedes
- t: Teilung
- x: Tiefe des Halteabschnitts
- y: Materialstärke des Übergangsabschnitts
- z₁: Dicke des Halteabschnitts quer zur Lastrichtung
- z₂: größte Querschnittsabmessung des Halteabschnitts

## Patentansprüche

1. Anordnung, umfassend ein Endglied (2) eines Kettenstranges (3) aus Kettengliedern (4) vorbestimmter Geometrie und eine Vorrichtung (1) zum Anschlagen des Endgliedes (2) des Kettenstranges (3) aus den Kettengliedern (4) vorbestimmter Geometrie, mit wenigstens einer Halteeinrichtung (5), die wenigstens einen in eine Öffnung (8) des Endgliedes einführbaren Einführabschnitt (7) an wenigstens einem Ende (6) und wenigstens einen Halteabschnitt (10) aufweist, wobei der Halteabschnitt einen Querschnitt (28) aufweist, auf den das Endglied in einer begrenzten Anzahl von Haltestellungen (29) vom Einführabschnitt her aufschiebbar ist, und mit wenigstens einem Verschlusselement (12), durch die das Endglied auf der Halteeinrichtung unverlierbar sicherbar ist, wobei das Verschlusselement (12) einen Anschlag (14) bildet, durch den eine Bewegung des Endgliedes (2) aus dem Halteabschnitt (10) in Richtung des Einführabschnittes (7) blockiert ist, und wobei der Einführabschnitt (7) einen Querschnitt (23) aufweist, auf dem das Endglied (2) des Kettenstranges (3) in einer begrenzten Anzahl von Einführstellungen (20) aufschiebbar ist, **dadurch gekennzeichnet, dass** eine einzige Einführstellung (20) vorgesehen ist.

2. Anordnung nach Anspruch 1, **dadurch gekennzeichnet, dass** lediglich eine einzige Haltestellung (29) vorgesehen ist, in der das Endglied (2) mit dem Kettenstrang (3) auf den Halteabschnitt (10) aufschiebbar ist.

3. Anordnung nach einem der Ansprüche 1 oder 2, **dadurch gekennzeichnet, dass** die Halteeinrichtung (5) zwischen dem Einführ- und dem Halteabschnitt (7, 10) einen Übergangsabschnitt (25) aufweist, auf dem das Endglied (2) in seiner Ebene (21) drehbar aufnehmbar ist.

4. Anordnung nach einem der Ansprüche 1 bis 3, **dadurch gekennzeichnet, dass** der Halte- und/oder Einführabschnitt (10, 7) eine Tiefe (x) aufweist, die größer als die Hälfte der Teilung (t) des Endgliedes (2) und kleiner als die Differenz von Teilung (t) und Materialstärke (d) ist.

5. Anordnung nach einem der Ansprüche 1 bis 4, **dadurch gekennzeichnet, dass** die Summe aus der Materialstärke (d) des in das Endglied (2) eingehängten Kettengliedes (4) und der Tiefe (x) des Querschnittes (23, 28) von Halte- und/oder Einführabschnitt (10, 7), jeweils gemessen in Richtung der Teilung (t) des auf den Halteabschnitt (10) aufgeschobenen Endgliedes (2), wenigstens 90 % und höchstens der Teilung (t) entspricht.

6. Anordnung nach einem der Ansprüche 1 bis 5, **dadurch gekennzeichnet, dass** der Querschnitt (23, 28) von Einführ- und/oder Halteabschnitt (7, 10) zwei unterschiedlich stark gekrümmte Schmalseiten (7', 7", 10', 10") aufweist.

7. Anordnung nach einem der Ansprüche 1 bis 6, **dadurch gekennzeichnet, dass** die Krümmung (46) einer Schmalseite (7", 10") von Einführ- und/oder Halteabschnitt (7, 10) der Krümmung eine Öffnung (8) des Endgliedes (2) wenigstens etwa entspricht.

8. Anordnung nach einem der Ansprüche 1 bis 7, **dadurch gekennzeichnet, dass** eine schwächer konvex gekrümmte oder eine konkave Schmalseite (7', 10') des Halte- und/oder Einführabschnittes (7, 10) bei aufgeschobenem Endglied (2) dem Kettenstrang (3) zugewandt ist.

9. Anordnung nach einem der Ansprüche 1 bis 8, **dadurch gekennzeichnet, dass** der Anschlag (14) weniger als eine Materialstärke (d) des Endgliedes (2) vom Halteabschnitt (10) in Verschieberichtung (9) des Endgliedes (2) beabstandet ist.

10. Anordnung einem der Ansprüche 1 bis 9, **dadurch gekennzeichnet, dass** der Anschlag (14) zum Halteabschnitt (10) weist und eine Kontur aufweist, die einer Außenkontur eines in das Endglied (2) eingehängten Kettengliedes (4) im Wesentlichen folgt.

11. Anordnung nach einem der Ansprüche 1 bis 10, **dadurch gekennzeichnet, dass** sich eine Außenkontur, die sich aus der Kombination des an einer Schmalseite (7", 10") des Querschnittes (23, 28) von Einführ- und/oder Halteabschnitt (7, 10) angeordneten Querschnittes (24) eines Kettengliedes (4) des Kettenstranges mit dem Querschnitt (23, 28) von Einführ- und/oder Halteabschnitt (7, 10) ergibt, in die Öffnung (8) des Endgliedes (2) einschreibbar ist, während eine Außenkontur, die sich aus der Kombination des an einer anderen Schmalseite (7", 10") des Querschnittes (23, 28) von Einführ- und/oder Halteabschnitt (7, 10) angeordneten Querschnittes (24) eines Kettengliedes (4) des Kettenstranges (3) mit dem Querschnitt (23, 28) von Einführ- und/oder Halteabschnitt (7, 10) ergibt, in die Öffnung (8) des Endgliedes (2) nicht einschreibbar ist.

12. Anordnung nach einem der Ansprüche 1 bis 11, **dadurch gekennzeichnet, dass** ein Anschlag (63) des Verschlusselements (12) für das sich in einer Einführstellung (20) außerhalb des Halteabschnitts (10) befindliche Endglied (2) bei an der Vorrichtung (1) angebrachtem Verschlusselement (12) weniger als eine Materialstärke (d) des Endgliedes (2) vom Halteabschnitt (12) entfernt ist.

## Claims

1. Assembly, comprising an end link (2) of a chain strand (3) made of chain links (4) of a predetermined geometry, and a device (1) for attaching the end link (2) of the chain strand (3) made of the chain links (4) of a predetermined geometry comprising at least a retaining device (5) comprising at least an insertion segment (7) at at least one end (6) that can be inserted in an opening (8) of the end link, and at least a retaining segment (10) where the retaining segment comprises a cross section (28) on which the end link can be placed in a limited number of retaining positions (29) from the insertion segment, and comprising at least a closure element (12) by which the end link can be permanently secured to the retaining device, wherein the closure element (12) forms a stop (14) by which a motion of the end link (2) out of the retaining segment (10) in the direction of the insertion segment (7) is blocked, wherein the insertion segment (7) comprises a cross section (23) on/onto which the end link (2) of the chain strand (3) can be slid or placed in a limited number of insertion positions (20), **characterized in that** a single insertion position (20) is provided.

2. Assembly according to claim 1, **characterized in that** only a single retaining position (29) is provided in which the end link (2) can with the chain strand (3) be slid onto or placed on the retaining segment (10).

3. Assembly according to one of claims 1 or 2, **characterized in that** the retaining device (5) between the insertion and the retaining segment (7, 10 ) comprises a transition segment (25) on which the end link (2) can be received rotatably in its plane (21).

4. Assembly according to one of the claims 1 to 3, **characterized in that** the retaining and/or insertion segment (10, 7) has a depth (x) that is greater than half of the pitch (t) of the end link (2) and smaller than the difference between the pitch (t) and the material thickness (d).

5. Assembly according to one of the claims 1 to 4, **characterized in that** the sum of the material thickness (d) of the chain link (4) hooked into the end link (2) and the depth (x) of the cross section (23, 28) of the retaining and/or insertion segment (10, 7), each measured in the direction of the pitch (t) of the end link (2) placed on the retaining segment (10), corresponds to at least 90% and not more than the pitch (t).

6. Assembly according to one of the claims 1 to 5, **characterized in that** the cross section (23, 28) of the insertion and/or retaining segment (7, 10) comprises two narrow sides (7 ', 7", 10', 10") curved to a different degree.

7. Assembly according to one of the claims 1 to 6, **characterized in that** the curvature (46) of a narrow side (7", 10") of the insertion and/or retaining segment (7, 10) corresponds at least approximately to the curvature of an opening (8) of the end link (2).

8. Assembly according to one of the claims 1 to 7, **characterized in that** a weaker convexly curved or a concave narrow side (7 ', 10') of the retaining and/or insertion segment (7, 10) faces the chain link (3) when the end link (2) is placed or slid on.

9. Assembly according to one of the claims 1 to 8, **characterized in that** the stop (14) is spaced less than a material thickness (d) of the end link (2) from the retaining segment (10) in the sliding direction (9) of the end link (2).

10. Assembly according to one of the claims 1 to 9, **characterized in that** the stop (14) faces the retaining segment (10) and has a contour substantially following an outer contour of a chain link (4) hooked into the end link (2).

11. Assembly according to one of the claims 1 to 10, **characterized in that,** an outer contour resulting from the combination of a cross section (24) of a chain link (4) of the chain strand arranged at a narrow side (7", 10") of the cross section (23, 28) of the insertion and/or retaining segment (7, 10) with the cross section (23, 28) of the insertion and/or retaining segment (7, 10), is insertable or inscribable into the opening (8) of the end link (2), whereas an outer contour resulting from the combination of a cross section (24) of a chain link (4) of the chain strand arranged at another narrow side (7", 10") of the cross section (23, 28) of the insertion and/or retaining segment (7, 10) with the cross section (23, 28) of the insertion and/or retaining segment (7, 10), is not insertable or inscribable into the opening (8) of the end link (2).

12. Assembly according to one of the claims 1 to 11, **characterized in that** a stop (63) of the closure element (12) for the end link (2) being in an insertion position (20) outside of the retaining segment (10), for a closure element (12) mounted to the device (1), is spaced from the retaining segment (12) at a distance of less than a material thickness (d) of the end link (2).

## Revendications

1. Agencement, comprenant un maillon d'extrémité (2) d'un brin de chaîne (3) constitué de maillons de chaîne (4) présentant une géométrie prédéfinie et un dispositif (1) permettant d'accrocher le maillon d'extrémité (2) du brin de chaîne (3) constitué de maillons de chaîne (4) présentant une géométrie prédéfinie, avec au moins un dispositif de retenue (5) présentant au moins une section d'introduction (7) pouvant être introduite dans une ouverture (8) du maillon d'extrémité au niveau d'au moins une extrémité (6) et au moins une section de retenue (10), dans lequel la section de retenue présente une section transversale (28) sur laquelle le maillon d'extrémité peut être coulissé à partir de la section d'introduction dans un nombre limité de positions de retenue (29), et avec au moins un élément de verrouillage (12) grâce auquel le maillon d'extrémité peut être retenu de manière imperdable sur le dispositif de retenue, dans lequel l'élément de verrouillage (12) forme une butée (14) grâce à laquelle un coulissement du maillon d'extrémité (2) à partir de la section de retenue (10) en direction de la section d'introduction (7) est empêché, et dans lequel la section d'introduction (7) présente une section transversale (23) sur laquelle le maillon d'extrémité (2) du brin de chaîne (3) peut être coulissé dans un nombre limité de positions d'introduction (20), **caractérisé en ce qu'**une seule position d'introduction (20) est prévue.

2. Agencement selon la revendication 1, **caractérisé en ce qu'**une seule position de retenue (29), dans laquelle le maillon d'extrémité (2) peut être coulissé avec le brin de chaîne (3) sur la section de retenue (10), est prévue.

3. Agencement selon l'une quelconque des revendications 1 ou 2, **caractérisé en ce que** le dispositif de retenue (5) présente entre la section d'introduction et la section de retenue (7, 10) une section de transition (25) sur laquelle le maillon d'extrémité (2) peut être accueilli de manière rotative dans son propre plan (21).

4. Agencement selon l'une quelconque des revendications 1 à 3, **caractérisé en ce que** la section de retenue et/ou d'introduction (10, 7) présente une profondeur (x) supérieure à la moitié du pas (t) du maillon d'extrémité (2) et inférieure à la différence entre le pas (t) et l'épaisseur de matériau (d).

5. Agencement selon l'une quelconque des revendications 1 à 4, **caractérisé en ce que** la somme de l'épaisseur de matériau (d) du maillon de chaîne (4) suspendu au maillon d'extrémité (2) et de la profondeur (x) de la section transversale (23, 28) de la section de retenue et/ou d'introduction (10, 7), mesurées respectivement dans le sens du pas (t) du maillon d'extrémité (2) coulissé sur la section de retenue (10), représente au moins 90 % du pas (t).

6. Agencement selon l'une quelconque des revendications 1 à 5, **caractérisé en ce que** la section transversale (23, 28) de la section d'introduction et/ou de retenue (7, 10) présente deux côtés étroits (7', 7", 10', 10") de courbure plus ou moins forte.

7. Agencement selon l'une quelconque des revendications 1 à 6, **caractérisé en ce que** la courbure (46) d'un côté étroit (7", 10") de la section d'introduction et/ou de retenue (7, 10) correspond au moins approximativement à la courbure d'une ouverture (8) du maillon d'extrémité (2).

8. Agencement selon l'une quelconque des revendications 1 à 7, **caractérisé en ce qu'**un côté étroit (7', 10') concave ou plus faiblement convexe de la section de retenue et/ou d'introduction (7, 10) fait face au brin de chaîne (3) lorsque le maillon d'extrémité (2) est coulissé.

9. Agencement selon l'une quelconque des revendications 1 à 8, **caractérisé en ce que** la butée (14) est distante de la section de retenue (10) de moins d'une épaisseur de matériau (d) du maillon d'extrémité (2) dans le sens de coulissement (9) du maillon d'extrémité (2).

10. Agencement selon l'une quelconque des revendications 1 à 9, **caractérisé en ce que** la butée (14) fait face à la section de retenue (10) et présente un contour qui suit essentiellement un contour extérieur d'un maillon de chaîne (4) suspendu au maillon d'extrémité (2).

11. Agencement selon l'une quelconque des revendications 1 à 10, **caractérisé en ce qu'**un contour extérieur résultant de la combinaison de la section transversale (24), agencée au niveau d'un côté étroit (7", 10") de la section transversale (23, 28) de la section d'introduction et/ou de retenue (7, 10), d'un maillon de chaîne (4) du brin de chaîne avec la section transversale (23, 28) de la section d'introduction et/ou de retenue (7, 10) peut s'inscrire dans l'ouverture (8) du maillon d'extrémité (2), tandis qu'un contour extérieur résultant de la combinaison de la section transversale (24), agencée au niveau d'un autre côté étroit (7", 10") de la section transversale (23, 28) de la section d'introduction et/ou de retenue (7, 10), d'un maillon de chaîne (4) du brin de chaîne (3) avec la section transversale (23, 28) de la section d'introduction et/ou de retenue (7, 10) ne peut s'inscrire dans l'ouverture (8) du maillon d'extrémité (2).

12. Agencement selon l'une quelconque des revendications 1 à 11, **caractérisé en ce qu'**une butée (63) de l'élément de verrouillage (12) destinée au maillon d'extrémité (2) se trouvant dans une position d'introduction (20) à l'extérieur de la section de retenue (10) est éloignée de la section de retenue (10) de moins d'une épaisseur de matériau (d) du maillon d'extrémité (2) lorsque l'élément de verrouillage (12) est en place au niveau du dispositif (1).
